Europäisches Patentamt

European Patent Office

Office européen des brevets

(11) Publication number: **0 239 291 A2**

(12) **EUROPEAN PATENT APPLICATION**

(21) Application number: **87302143.0**

(22) Date of filing: **12.03.87**

(51) Int. Cl.⁴: **G11B 15/67**

(30) Priority: **21.03.86 US 842448**

(43) Date of publication of application:
**30.09.87 Bulletin 87/40**

(84) Designated Contracting States:
**DE FR GB NL**

(71) Applicant: **Laser Magnetic Storage International Company**
**4425 Arrows West Drive**
**Colorado Springs Colorado 80907(US)**

(72) Inventor: **Sachuk, Daniel B.**
**312 Biddle Drive**
**Exton Pennsylvania 19341(US)**

(74) Representative: **Caro, William Egerton et al**
**J. MILLER & CO. Lincoln House 296-302 High Holborn**
**London WC1V 7JH(GB)**

(54) **Transport apparatus for recording tape.**

(57) There is provided a transport apparatus for receiving and operating upon a tape cartridge (2) including a web of tape (5) disposed on a supply reel (6) and having a free end (11) engaged by a leader block (10). The leader block has an engagment slot (17) open to a rear edge of the tape cartridge, an engagment pin (16) engages the slot of the leader block for delivery of the tape to a take-up reel (21). The tape path is such that the engagment pin (16) is remote from the rear edge (14) of the tape cartridge (2).

FIG. I

## TRANSPORT APPARATUS FOR RECORDING TAPE.

This invention relates to transport apparatus for recording tape, and in particular, magnetic tape in cartridge form.

In the course of developing various systems for the storage of data on magnetic recording tape, particularly off-line storage of data in the form of back-up storage, a variety of different formats have been developed. Many of these formats call for the tape to be contained in an appropiate cartridge, both to facilitate handling the tape while in use, and to protect the tape while in storage.

Recently, I B M Corporation has announced a tape cartridge which is primarily intended for use in its model 3480 data storage system, for the storage of relatively large quantities of data (in the order of 200 megabytes ). Details regarding the construction of this type of tape cartridge (herein after referred to as a 3480 tape cartridge) are given in United States Patent Specification No. 4, 452, 406. The 3480 tape cartridge is comprised of a single reel containing a quantity of magnetic tape and contained in a rectangular enclosure having dimensions on the order of 10cm (4 inch) in width, 7.5cm (5 inches) in length and 2.5cm (1 inch) in height. The cartridge enclosure includes an aperture in one of its corners, for gaining access to the free end of the web tape. A so-called "leader block" is connected to the free end of the tape, and is frictionally received within the open corner of the cartridge so that it is capable of being withdrawn from and replaced within the cartridge by appropiate means.

In connection with the 3480 tape cartridge, I B M Corporation has also developed transport apparatus for receiving the tape cartridge and for properly placing the web of tape which it contains in operative association with a magnetic read/write head. Further details regarding such transport apparatus may be had with reference to United States Patent Specification No. 4, 432, 508, 4, 399, 959, 4, 399, 936 and 4, 335, 858, which illustrate various different devices which have been developed by the I B M Corporation to accommodate its 3480 tape cartridge.

Unlike many of the other types of tape cartridges which have been developed for use in the off-line storage of data the 3480 tape cartridge houses only a single reel of magnetic recording tape. The leader block which is connected to the free end of the web of tape is used to introduce the web of tape to the transport apparatus (and the read/write head). To this end, the transport apparatus must be provided with appropiate means for withdrawing the leader block from its nesting within the 3480 tape cartridge, and for threading the leader block ( and the web of tape) through the apparatus and past the read/write head. Of course means must also be provided for unthreading the web of tape (and the leader block) from the apparatus and for replacing the leader block from within its nesting in the 3480 tape cartridge. In connection with such operations, there are two major considerations which bear noting.

First, special means must be provided to engage the leader block assembly and to guide the leader block (and the tape which follows) through the transport apparatus which is to operate upon the web of tape.

This requires care in withdrawing the leader block from the tape cartridge, and in guiding the web of tape from the supply reel of the tape cartridge, past the read/write head, and into engagement with the take-up reel which is traditionally provided to cooperate with the supply reel in transporting the web of tape through the apparatus and past the read/write head. This necessitates the development of an appropiate path for threading the leader block through the apparatus, as well as means which have sufficient driving forces to withdraw the leader block from its normally seated position within the tape cartridge, and to replace the leader block within this normally seated position after the tape cartridge has been used. To meet these needs, as well as other design requirements regarding data density and performance characteristics, those devices described in the above identified United States Patents each make use of a loading mechanism which is essentially seperate from the remainder of the apparatus which is used to operate upon the magnetic recording tape. In each case, a track or groove is provided for guiding the leader block through the desired tape path and to the take-up reel, under the influence of a dedicated driving means which is seperate from the various components comprising the tape transport. Although several different mechanisms are described, in each case a seperate motor and track/groove drive is provided to achieve proper interfacing of the web of tape with the apparatus.

Second, as with any magnetic tape recording apparatus, care must be taken to develop a proper tape path between the supply and take-up reels, and across the read/write head, to assure proper registration of the tape with the read/write head. The primary consideration in this regard is one of length, since the tape path must generally be long enough to accommodate distortion of the tape as the web of tape is drawn through the apparatus , as a result of mechanical irregularities in the apparatus. To this end, those devices described in the above identified patent specifications each provide a tape path of significant length, to account for such potential irregularities. A secondary consideration is that care must be taken to avoid undesirable contact between the oxide coating provided on the web of magnetic recording tape, and components of the apparatus other than the read/write head, such as bearings and idler rollers. When the 3480 tape cartridge is used as intended in the various devices described in the above-identified patents, the oxide coating (formed on the inner most face of the tape on the supply reel) normally faces toward the interior of the transport apparatus due to its orientation. As a result of this placement, as the tape is threaded through the transport apparatus the potential exists for the oxide coating to be drawn across various of the guiding structures associated with the apparatus. Since contact with such structures can compromise the useful life of the tape cartridge, and give rise to a potential for memory loss in the event that portions of the oxide coating become damaged, special care is taken to avoid contact between the oxide coating and those guiding structures which the oxide coating could potentially contact. For example, air bearings are provided on either side of the read/write head to avoid contact between the bearings and the web of tape which passes across them.

As a result of these and other design considerations, those devices which have been developed to operate upon 3480 tape cartridges have generally been large, cumbersome and expensive. While this can be justified in connection with relatively large, mainframe applications, such design constraints have significantly limited, if not totally precluded use of the 3480 tape cartridge in connection with relatively low cost, minicomputer or microcomputer applications.

Yet another consideration which has inhibited use of the 3480 tape cartridge in mini/micro computer applications is one of space. It is generally impractical and therefor undesirable , to necessitate the purchase of an apparatus for off-line, back-up storage or the like which is significantly larger than the primary equipment which the apparatus is to support. In fact, due to the prevalent use of 13.3 cm (5 1/4 inch) magnetic recording (floppy discs) in connection with such applications , a de facto standard has come about for any form of storage equipment ( floppy disc, hard disc, cartridge etc ) which is to replace or relate to such conventional storage means. The recognized " form factor" or "footprint" of a standard 13.3 cm (5 1/4 inch) magnetic recording disc calls for a container or housing having dimensions on the order of 14.6 cm (5 3/4 inch) in width 20.3 cm (8 inch) in depth and 8.2 cm (3 1/4 inch) in height. Those devices described in the above-identified patents are not adaptable to such applications.

Accordingly, limitations of cost and size significantly limited the ability to use the I B M 3480 tape cartridge in mini/micro computer applications. United States Patent Applications Serial Numbers 842446 and 842450 describe a simplified means for loading and unloading the leader block of a 3480 tape cartridge , making use of a loading/unloading mechanism which is directly associated with the take-up reel of the apparatus rather than a seperate mechanism. To this end, the take-up reel of the apparatus is provided with a linkage which extends from the periphery of the take-up reel, and which has a pin for engaging the leader block of a tape cartridge. The pin of the linkage is caused to proceed along a specified path, following a camming surface under the influence of an over-spring, to achieve effective transfer to the leader block from the tape cartridge, through its specified tape path, to the take-up reel, and vice versa. Consequently, leader block loading and unloading is accomplished without requiring the use of an additional drive mechanism for this purpose significantly reducing the number of components of the apparatus, and enabling the apparatus to be reduced to a size which can be fit within a standard 13.3 cm (5 1/4 inch) footprint or form factor.

However, reducing the size of the enclosure for the apparatus presented corresponding limitations regarding the length of the tape path which could be developed within the confines of that enclosure. Accordingly, a need arose to develop a tape path within an enclosure of reduced size which would not compromise performance of the web of tape being transported within the apparatus. The present invention seeks to provide a transport apparatus for receiving and operating upon an I B M 3480 tape cartridge, which is sufficiently compact to fit within a standard 13.3 cm (5 1/4 inch) footprint or form factor without compromising performance of the tape cartridge.

The present invention also seeks to provide transport apparatus in which a tape cartridge is received within the apparatus so as to develop an appropiate tape path for the tape as it is withdrawn from the tape cartridge and loaded into the apparatus. Moreover, the present invention seeks to provide transport apparatus which is simple and reliable in operation, and which is cost effective even in connection with mini/micro computer applications.

According to one aspect of the present invention there is provided a transport apparatus for receiving and operating upon a tape cartridge including a web of tape disposed on a supply reel and having a free end engaged by a leader block, said leader block having an engagment slot open to a rear edge of said tape cartridge, and having engagement means for engaging the slot of said leader block for delivery to a take-up reel characterised by a tape path wherein said engagement means is remote from the rear edge of said tape cartridge.

According to another aspect of the present invention there is provided a transport apparatus for placing a web of tape in operative association with a read/write head,

said tape having a first surface with an oxide coating and an opposite second surface said apparatus comprising, a pair of bearings positioned on opposite sides of said read/write head and including surfaces for receiving the second surface of said tape, a mounting plate for receiving said bearings and for moving said bearings between a first position in which the first surface of said tape is spaced from said read/write head and a second position in which said first surface is in contact with said read/write head and drive means for moving said mounting plate between said first and second positions.

As previously discussed, when a 3480 tape cartridge is used as normally intended by its manufacturer the potential exists for the oxide coating on the web of tape to come into contact with the bearings and idler rollers which are traditionally provided to guide the web of tape through the apparatus and to place the web of tape in proper association with read/write head. It has been found that this difficulty can also be overcome without the need for relatively expensive air bearings etc by operating upon a tape cartridge which is received within the transport apparatus in an orientation which is rotated 90 degrees from its normally intended orientation. As a result, the tape cartridge is received within the transport apparatus along a side edge, rather than its rear face, so that the leader block is positioned along the left side of the transport apparatus as viewed from the front, rather than its usual position along the right side of the transport apparatus.

Consequently, as the tape is withdrawn from the tape cartridge, the oxide coating is caused to face outwardly, avoiding potential contact with guiding structures such as bearings and idler rollers.

The invention is illustrated merely by way of example, in the accompanying drawings, in which;

Figure 1 is a top plan view of an apparatus according to the present invention for operating upon a tape cartridge as it is initially received within the apparatus.

Figure 2 is a cross sectional view of the apparatus shown in Figure 1.

Figures 3 and 4 are top plan views similar to Figure 1, showing sequential operation of a leader block loading mechanism.

Figure 5 is a top plan view of a movable mounting plate used to achieve the tape path illustrated in Figure 4 and;

Figure 6 is a partial, sectional view of the movable mounting plate illustrated in Figure 5.

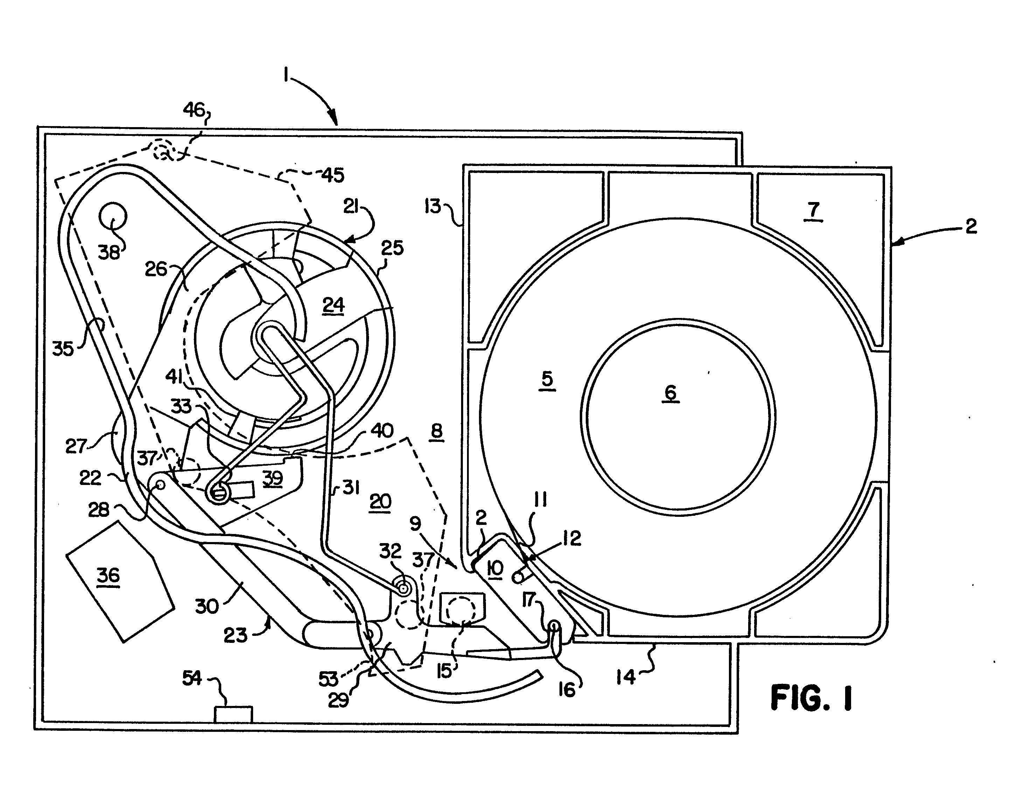

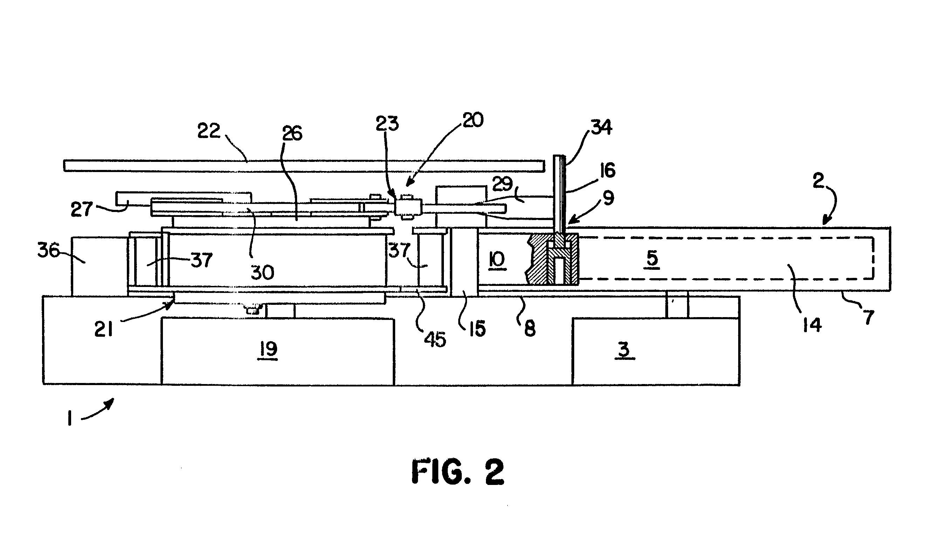

Figures 1 and 2 show a transport apparatus according to the present invention for receiving and operating upon an I B M 3480 tape cartridge 2. To be noted is that the transport apparatus 1 is sufficiently compact to be received within the confines of a standard 13.3cm (5 1/4 inch) form factor or footprint.

The tape cartridge 2 generally comprises a quantity of tape 5 wound upon a supply reel 6 and contained within a housing 7.

Suitable means (preferably a geared, magnetic coupling) are provided for placing the supply reel 6 in operative association with a supply motor 3 positioned beneath the surface 8 of the transport apparatus 1. A corner 9 of the housing 7 is open, and receives a leader block 10 which is used to engage securely a free end 11, of the tape 5 in the manner shown. As produced by the manufacturer, an inwardly facing surface 12 of the tape 5 is provided with the requisite oxide coating.

For reasons which will become apparant from the following description, and in accordance with the present invention, it is preferable for the tape 5 to be received within the transport apparatus 1 so that the leader block 10 is remote from the operative features of the transport apparatus 1, to extend the available tape path , and so that the surface 12 of the tape 5 faces generally outwardly as the tape 5 is withdrawn from the tape cartridge 2 and introduced into the transport apparatus 1, to avoid the potential for contact with such operative features. To this end, the tape cartridge 2 is recieved within the transport apparatus 1 along a lateral W side edge 13, rather than being recieved along its rear edge 14, in the usual manner.

This essentially rotates the tape cartridge 2 through an angle of 90 degrees, so that the leader block 10 is positioned along the left side of the transport apparatus 1 as viewed from its front, rather than its usual placement along the right side of the transport apparatus 1.

Consequently, as the tape 5 is withdrawn from the tape cartridge 2, passing over a first idler roller 15, the tape 5 is remote from the operative features of the transport apparatus 1, and the surface 12 of the tape 5 is caused to face outwardly, as desired, and away from the surface of the idler roller 15. Means for receiving the tape cartridge 2 in this orientation and for readying the tape cartridge 2 and the leader block 10 for further use are described with referance to United States Patent Application Serial no. 842449.

Thus the tape cartridge 2 is effectively received within the transport apparatus 1 in the orientation desired, and is readied for further operation as follows. First, the supply reel 6 is operatively connected to the supply motor 3 which is positioned beneath the surface 8 of the transport apparatus 1, so as to achieve desired rotation of the supply reel 6 in accordance with the selected mode of operation of the transport apparatus 1. Second, a configured pin 16 is brought into engagement with a slot 17 which is conventionally provided in the leader block 10 of the tape cartridge 2, so as operatively to connect the leader block 10 with a leader block loading/unloading mechanism 20, and ready the leader block 10 for loading into the transport apparatus 1 as will be described below.

A detailed description of the leader block loading/unloading mechanism 20, and its manner of operation is provided in the above mentioned United States Patent Applications Serial No. 842446 and 842450.

However, in brief, the leader block loading/unloading mechanism 20 is comprised of three major components including a configured take-up reel 21, a contoured camming surface 22, and an articulating engagement mechanism 23.

The take-up reel 21 is operatively connected to a take-up motor 19, and includes a cavity 24 which is correspondingly configured to the leader block 10 of the tape cartridge 2, to receive the leader block 10 upon its delivery to the take-up reel 21. The cavity 24 is preferably configured to securely receive the leader block 10 so that a rear face 25 of the leader block 10 fills the cavity 24 and coterminates with the periphery of the take-up reel 21, essentially completing the periphery of the take-up reel 21 so as to receive properly the tape 5. An upper surface 26 of the take-up reel 21 is provided with a flange 27 which as a secondary function serves to retain the tape 5 to the take-up reel 21, and as a primary function serves to receive the articulating engagement mechanism 23, at the pivot 28.

The articulating engagement mechanism 23 is generally comprised of two arms 29, 30 extending between the pivot 28 and the pin 16 which is used to engage the slot 17 of the leader block 10. Respective articulation of the arms 29, 30 is regulated by a spring 31 which is connected between attachments points 32, 33 fixed on the arms 29, 30. The contoured camming surface 22 is positioned above the flange 27 of the take-up reel 21 so that the take-up reel 21 and the articulating engagement mechanism 23 are capable of movement beneath the contoured camming surface 22, but so that an upper end 34 of the pin 16 is capable of following a face 35 of the contoured camming surface 22 to achieve loading and unloading of the leader block 10.

Sequential operation of the loading/unloading mechanism 20 serves to transfer the leader block 10 of the tape cartridge 2 from its seated position within the corner 9 of the housing 7, past a read/write head 36, and to the cavity 24 in the take-up reel 21, so that the tape 5 is ready for transport between the supply reel 6 and the take-up reel 21 under the influence of the motors 3, 19.

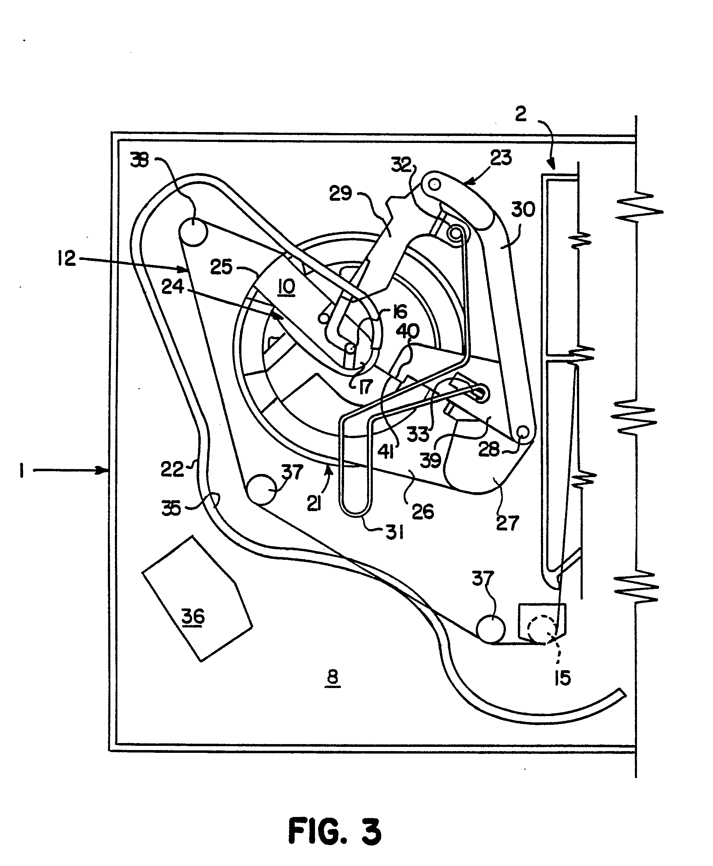

To accomplish this, the take-up reel 21 is caused to undergo a clockwise movement under the influence of the take-up motor 19, initially to withdraw the leader block 10 from the housing 7. With reference to Figure 3, further movement of the articulating engagement mechanism 23 responsive to continued clockwise rotation of the take-up reel 21 causes the pin 16 (with the leader block 10 attached) to progress around the idler roller 15, past a pair of bearings 37, and around yet another idler roller 38, for delivery to the cavity 24 of the take-up reel 21, by following the contour defined by the face 35 of the camming surface 22.

In accordance with the present invention, the tape path developed within the transport apparatus 1 is maximized by placing the corner 9 of the tape cartridge 2 in a position which is remote from the operative features of the transport apparatus 1, such as the take-up reel 21 and the read/write head 36. Because of this, the articulating engagement mechanism 23 must initially be capable of significant extension. However, as the articulating engagement mechanism 23 is retracted along the face 35 of the camming surface 22, steps must be taken to reduce the extension of the articulating engagement mechanism 23 so as to enable its further clockwise rotation. To this end, the arm 29 of the articulating engagement mechanism 23 is provided with a flange 39 which terminates at a bearing surface 40 for cooperation with a stop 41 provided in the take-up reel 21, to permit regulated inward rotation of the arm 29.

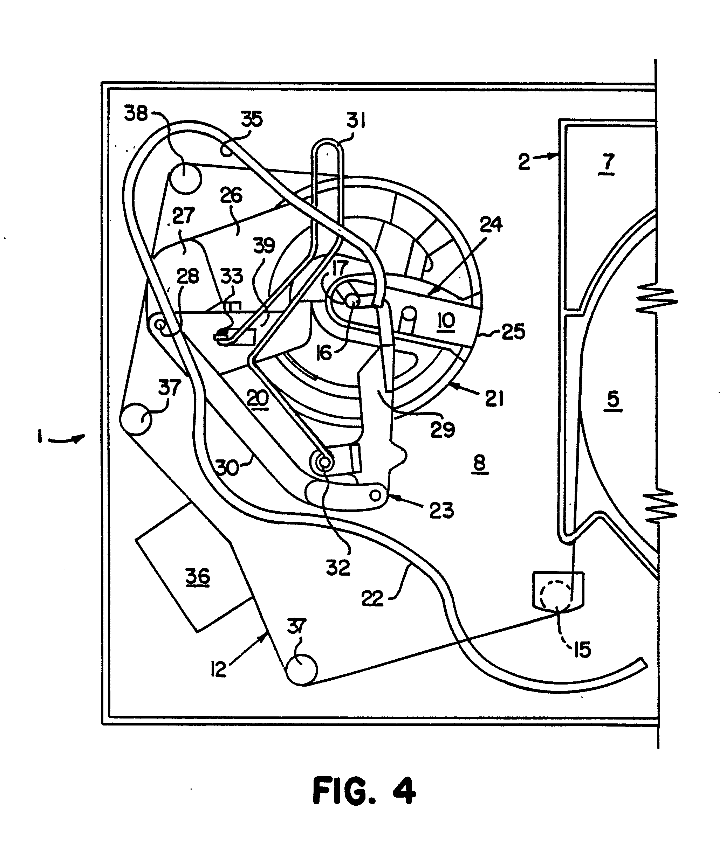

Of course, in actual operation, the tape 5 must be transported between the supply reel 6 and the take-up reel 21 in a manner which assures that the surface 12 of the tape 5 is in proper contact with the read/write head 36. In delivering the leader block 10 to the take-up reel 21 as previously described, it is important to provide a space between the read/write head 36 and the plane of the bearings 37 which will enable passage of the leader block 10. In such case to develop proper contact with the read/write head 36 it becomes necessary to reorient the bearings 37, and the tape 5, into the operative position which is shown in Figure 4.

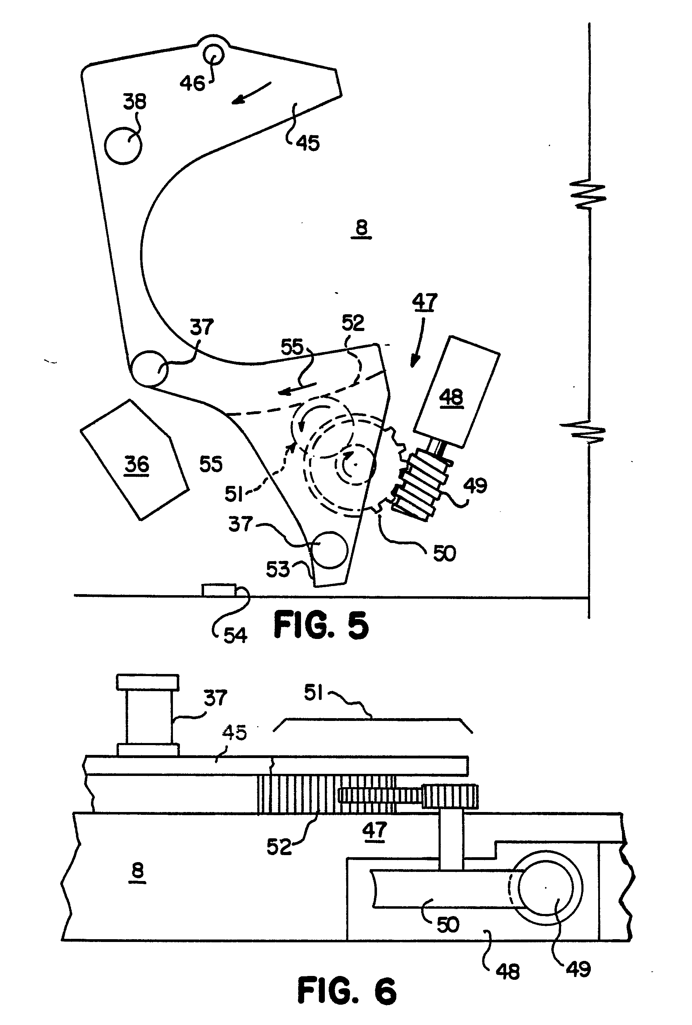

To this end, and in accordance with the present invention, the bearings 37 and the idler roller 38 are mounted to a plate 45 (shown in phantom in Figure 1) which is capable of being rotated about a pivot 46 responsive to a drive mechanism 47, as is best illustrated in Figures 5 and 6. Rotation of the mounting plate 45 about the pivot 46 serves to urge the bearings 37 from a standby position shown in Figure 4, to develop an appropiate tape wrap about the read/write head 36 in accordance with recognized practices.

The drive mechanism 47 generally comprises a motor 48 which is provided with a worm 49 positioned transverse to a worm gear 50. A gear cluster or train 51 is provided for speed reduction and direction reversal and includes a gear segment 52 depending from the mounting plate 45 to progress toward the read/write head 36 in the direction of arrow 55, until a face 53 of the mounting plate 45 contacts a stop 54 which is used to regulate proper seating of the mounting plate 45 to achieve desired tape wrap about the read/write head 36. Gear reduction resulting from the gear train 51, as well as inter-ction with the worm 49, serves to retain the mounting plate 45 in this operative position during continued operation of the transport apparatus 1, providing a self locking feature which requires no power for maintained operation.

Having properly threaded the tape 5 through the transport apparatus 1, and having placed the oxide surface 12 of the web of tape 5 in appropiate contact with the read/write head 36, desired transfers of data may then take place in otherwise conventional manner. This proceeds until such time as the transfer of data has been completed and the tape cartridge 2 is to be unloaded from the transport apparatus 1. In essence this is accomplished by reversing the above described steps.

The first step necessary is to retract the mounting plate 45 , by reversing the direction of rotation of the motor 48. This, in turns, withdraws the bearings 37 and the idler roller 38 to their standby position, as shown in figure 3, to enable the leader block 10 to again pass between the bearings 37 and the read/write head 36. The supply motor 3 is then rotated in a clockwise direction until such time as the tape 5 is fully unwound from the take-up reel 21. Whereupon, continued rotation of the supply motor 3 causes the pin 16, and the leader block 10 to progress along the face 35 of the camming surface 22, returning the leader block 10 (and the tape 5) to the housing 7 of the tape cartridge 2.

It will therefor be seen that the foregoing transport apparatus serves well to satisfy each of the objectives previously set forth. The tape 5 is handled in a manner which maintains the surface 12 having the oxide coating away from potentially contacting structures, other than the read/write head 36. Moreover, this is accomplished while maintaining a significant tape path between the supply and take-up reels 6, 21 and the bearings 37. All of these benefits are acheived within the confines of a transport apparatus 1 which is capable of fitting within the standard 13.3 cm (5 1/4 inch) form factor or footprint which is preferred in connection with mini/micro computer equipment.

It is to be understood that the foregoing apparatus is capable of variation without departing from the spirit and scope of the present invention. For example, the read/write head 36 as well as the bearings 37 and idler rollers 15, 38, are capable of being moved to different locations along the surface 8 ( and the mounting plate 45) of the transport apparatus 1, and with respect to one another. Also capable of variation is the configuration of the mounting plate 45, and the tape wrap which it serves to develop the read/write head 36. In addition, the drive mechanism 47 is capable of variation to achieve such ends. For example a screw and nut mechanism or any frictional, self locking drive mechanism could be used in place of the worm gear drive previously described, if desired.

**Claims**

1. A transport apparatus for receiving and operating upon a tape cartridge (2) including a web of tape (5) disposed on a supply reel (6) and having a free end (11) engaged by a leader block (10) said leader block having an engagment slot (17) open to a rear end of said tape cartridge, and having engagment means (16) for engaging the slot of said leader block for delivery to a take-up reel (21) characterised by a tape path wherein said engagment means (16) is remote from the rear edge (14) of said tape cartridge (2).

2. Apparatus as claimed in claim 1 characterised in that said tape cartridge (2) has a lateral edge (13) adjacent to said rear edge (14), said engagment means (16) being adjacent to said lateral edge.

3. Apparatus as claimed in claim 1 or 2 characterised in that said tape (5) includes an oxide coating on a face which faces inwardly on said supply reel (6) said tape in operation being withdrawn from said tape cartridge so that said oxide coating faces generally outwardly from said transport apparatus.

4. Apparatus as claimed in claim 3 characterised in that tape is received on said take-up reel (21) with the oxide coating facing generally outwardly.

5. Apparatus as claimed in any preceeding claim characterised by a read/write head (36) positioned for operative communication with said tape.

6. Apparatus as claimed in claim 5 characterised by bearings (37) provided on opposite sides of said read/write head (36) to develop a tape wrap about said read/write head, said bearings being movable between a first position in which the plane of said bearings is spaced from the plane of said read/write head and a second position in which the plane of said bearings is in general alignment with the plane of said read/write head.

7. Apparatus as claimed in claim 6 characterised in that said bearings (37) are attached to a mounting plate (45) which is movable between said first and second positions.

8. Apparatus as claimed in claim 7 characterised in that movement of said mounting plate (45) to said second position is regulated by a stop (54) which limits tape wrap about said read/write head (36).

9. Apparatus as claimed in any of claims 6 to 8 characterised in that the face of said tape which is opposite the face with the oxide coating.

10. A transport apparatus for placing a web of tape in operative association with the read/write head (36) said tape having a first surface with an oxide coating and an opposite second surface said apparatus comprising; a pair of bearings (37) positioned on opposite sides of said read/write head (36) and including surfaces for receiving the second surface of said tape;
a mounting plate (45) for receiving said bearings (37) and for moving said bearings between a first position in which the first surface of said tape is spaced from said read/write head and a second position in which said first surface is in contact with said read/write head and drive means (48-52) for moving said mounting plate between said first and second positions.

11. Apparatus as claimed in claim 10 characterised in that said drive means (48-52) is arranged to retain said mounting plate (45) in said second position without the application of power.

12. Apparatus as claimed in claim 11 characterised in that said drive me=ns (48-52) is a self-locking mechanism.

13. Apparatus as claimed in any of claims 10 to 12 characterised in that said drive means (48-52) is a worm gear mechanism or a screw-and-nut mechanism or a frictional drive mechanism.

14. Apparatus as claimed in any preceeding claim characterised by being contained within a 13.3cm (5 1/4 inch) form factor.

FIG. I

**FIG. 2**

FIG. 3

**FIG. 4**

FIG. 5

FIG. 6